# EUROPÄISCHE PATENTANMELDUNG

(11) **EP 3 499 079 A1**
(43) Veröffentlichungstag der Anmeldung: **19.06.2019**
(21) Anmeldenummer: 18210119.6
(22) Anmeldetag: 04.12.2018
(51) Int. Cl.: F16F 1/38, B60K 25/00, F16F 1/377

(54) **HALTEVORRICHTUNG**

(30) Priorität: 13.12.2017 DE 102017222668
(71) Anmelder: Robert Bosch GmbH, 70442 Stuttgart (DE)
(72) Erfinder: Mahfoudh, Samir, 77815 Buehl (DE); Mueller, Daniel, 77855 Achern (DE)

(57) **Zusammenfassung**

Die Erfindung geht aus von einer Haltevorrichtung (12) zur Befestigung eines Aggregats (10), insbesondere einer Pumpe, an einem Kraftfahrzeug (14), mit einem Elastomerhalter (16) und einem Befestigungselement (18) zum Anbringen des Elastomerhalters (16) in einem Bauraum, insbesondere einem Kraftfahrzeug (14), wobei der Elastomerhalter (16) ein im Wesentlichen ringförmiges erstes Halteelement (22) und ein zweites Halteelement (28) aufweist, wobei das erste Halteelement (22) einen Innenbereich (20) aufweist, der zur Aufnahme des Aggregats (10) vorgesehen ist und wobei das zweite Halteelement (28) mittels wenigstens eines Dämpfungselementes (40) mit dem ersten Halteelement (22) verbunden ist, und wobei am zweiten Halteelement (28) das Befestigungselement (18) angeordnet ist. Es ist vorgesehen, dass das Dämpfungselement (40) überwiegend im Bereich des Befestigungselementes (18) angeordnet ist.

## Beschreibung

Die Erfindung geht aus von einer Haltevorrichtung zur Befestigung eines Aggregates, insbesondere einer Pumpe an einem Kraftfahrzeug, sowie einem Elastomerhalter nach Gattung der unabhängigen Ansprüche.

### Stand der Technik

Bei der Konstruktion und Auslegung von Aggregaten, wie beispielsweise von Kühlkreislaufpumpen für ein Kraftfahrzeug, sind die im Betrieb des Kraftfahrzeugs erwarteten, dynamischen Belastungen, welchen insbesondere Bauteile des Aggregats, wie beispielsweise die Leiterplatte oder Pin-Verbindungen, ausgesetzt sind, eine Herausforderung für die Entwickler in Bezug auf Dauerfestigkeit.

Beispielhaft seien hier Anforderungen an die Schüttelbelastbarkeit des Aggregats bei einem Anbau an einen Verbrennungsmotor genannt. Eine starre Halterung des Aggregats beziehungsweise der Pumpe am Verbrennungsmotor bedeutet eine ungedämpfte Übertragung der Anregungsenergie an die Pumpe und führt somit zu hohen Schüttelbelastungen, welchen die Pumpe ausgesetzt ist. Üblicherweise lassen sich solche Anregungsschwingungen durch elastische Halterungen stark dämpfen. Darüber hinaus stellt die von dem Aggregat ausgehende Schallübertragung, welche zu einer Geräuschbildung im Fahrzeuginnenraum führen kann, eine Herausforderung für die Entwickler dar.

Es ist bereits eine Haltevorrichtung mit einem Elastomerhalter bekannt, bei welcher der Elastomerhalter einen Innenbereich zur Aufnahme eines Aggregates aufweist. Auch ist es bekannt, dass der Elastomerhalter ein Dämpfungselement zur Entkopplung und Dämpfung, sowie ein Befestigungselement zum Anbringen des Elastomerhalters in einem Bauraum, insbesondere einem Kraftfahrzeug, aufweist. Bei bekannten Elastomerhaltern ist es vorgesehen, dass das Dämpfungselement in Umfangsrichtung gleichmäßig am Elastomerhalter angeordnet.

### Offenbarung der Erfindung

### Vorteile der Erfindung

Die Erfindung geht aus von einer Haltevorrichtung zur Befestigung eines Aggregats, insbesondere einer Pumpe, an einem Kraftfahrzeug, mit einem Elastomerhalter und einem Befestigungselement zum Anbringen des Elastomerhalters in einem Bauraum, insbesondere einem Kraftfahrzeug, wobei der Elastomerhalter ein im Wesentlichen ringförmiges erstes Halteelement und ein zweites Halteelement aufweist, wobei das erste Halteelement einen Innenbereich aufweist, der zur Aufnahme des Aggregats vorgesehen ist und wobei das zweite Halteelement mittels wenigstens eines Dämpfungselementes mit dem ersten Halteelement verbunden ist, und wobei am zweiten Halteelement das Befestigungselement angeordnet ist. Es wird vorgeschlagen, dass das Dämpfungselement überwiegend im Bereich des Befestigungselementes angeordnet ist.

Die erfindungsgemäße Haltevorrichtung mit den Merkmalen der unabhängigen Ansprüche weist den Vorteil auf, dass eine Übertragung von Resonanzfrequenzen und damit einhergehend eine unerwünschte Geräuschübertragung vom Aggregat über die Halteeinrichtung bis hin zum Kraftfahrzeuginnenraum minimiert werden kann. Neben der Geräuschminimierung kann die erfindungsgemäße Haltevorrichtung in vorteilhafter Weise als Dämpfungs- und Entkopplungselement dynamische Belastungen, wie beispielsweise Schüttel- und Vibrationsbelastungen, welche im Betrieb des Kraftfahrzeugs auftreten können, minimieren. Gleichzeitig kann eine erfindungsgemäße Haltevorrichtung in vorteilhafter Weise eine verliersichere Einspannung des Aggregats bereitstellen. Ferner ist es als vorteilhaft anzusehen, dass der Materialeinsatz für einen erfindungsgemäßen Elastomerhalter verringert werden kann und somit die Bauteilkosten gesenkt werden können.

Im Rahmen der vorliegenden Erfindung kann unter einem Dämpfungselement insbesondere ein Element verstanden werden, welches eine dämpfende Eigenschaft aufweist, das heißt in der Lage ist aufgrund der Dämpfung die Amplitude von Schwingungen zu verringern. In Abgrenzung zum ersten beziehungsweise zweiten Halteelementen weist das erfindungsgemäße Dämpfungselement einen höheren Dämpfungsfaktor auf, wobei sich der Dämpfungsfaktor aus dem Verhältnis von Eingangsgröße zu Ausgangsgröße des Übertragungsweges des Systems bestimmt. Erfindungsgemäß kann diese höhere Dämpfungsrate des Dämpfungselementes durch Formgebung und alternativ hierzu oder zusätzlich durch die Einstellung von spezifischen Materialeigenschaften bereitgestellt werden.

Durch die in den Unteransprüchen aufgeführten Maßnahmen ergeben sich vorteilhafte Weiterbildungen und Verbesserungen der unabhängigen Merkmale.

Die erfindungsgemäße Haltevorrichtung beziehungsweise eine vorteilhafte Weiterbildung zeichnet sich dadurch aus, dass das Dämpfungselement mit zunehmendem Abstand von dem Befestigungselement einen abnehmenden Querschnitt aufweist. Aufgrund der überwiegenden Anordnung des Dämpfungselementes im Bereich des Befestigungselementes kann in vorteilhafter Weise eine besonders hohe schwingungsisolierende und schwingungsdämpfende Wirkung an der Stelle bereitgestellt werden, an welcher der Übertragungspfad der Resonanzfrequenzen vom Aggregat in das Kraftfahrzeug am kleinsten sind. Durch den abnehmenden Querschnitt des Dämpfungselementes kann der benötigte Bauraum des Elastomerhalters in vorteilhafter Weise verringert werden und die notwendigen Materialaufwendungen zu Gunsten der Kosten reduziert werden

Gemäß einer besonders bevorzugten Ausführungsform der Erfindung weist das Dämpfungselement einen sichelförmigen Querschnitt auf und ist zwischen dem ersten Halteelement und dem zweiten Halteelement angeordnet. Aufgrund des symmetrisch zum Befestigungselement angeordneten Querschnittes des Dämpfungselementes mit seinen zulaufenden Enden erfolgt die Schwingungsdämpfung und Entkopplung gleichmäßig im Bereich des Befestigungselementes, wobei aufgrund des kontinuierlich kleiner werdenden Querschnittes in Richtung der Enden Spannungsüberhöhungen, welche in der Regel an Querschnittsprüngen auftreten, vorteilhaft verhindert werden können.

Gemäß einer vorteilhaften Weiterbildung der Erfindung ist es vorgesehen, dass das erste Halteelement zumindest abschnittsweise das Dämpfungselement und zusätzlich hierzu oder alternativ auch das zweite Halteelement in Tangentialrichtung umgreift. Durch die tangentiale Überdeckung am äußeren Umfang zwischen dem ersten Halteelement und dem zweiten Halteelement kann in vorteilhafter Weise ein Teil der Haltekraft des Elastomerhalters auf das Aggregat über das erste Halteelement bereitgestellt werden. Gedanklich lässt sich das erste Halteelement in zwei Abschnitte unterteilen. Einen ersten Abschnitt, welcher im Wesentlichen ringförmig ausgebildet ist und im montierten Zustand am Aggregat anliegt, und einen zweiten Abschnitt, welcher im Sinne eines äußeren Bandes zumindest teilweise das Dämpfungselement und alternativ hierzu oder zusätzlich auch das zweite Halteelement in tangentialer Richtung übergreift.

Die schwingungsisolierenden und schwingungsdämpfenden Eigenschaften des Dämpfungselementes können gemäß einer vorteilhaften Weiterbildung der Erfindung dadurch bereitgestellt werden, dass das Dämpfungselement eine Vielzahl an ersten Öffnungen aufweist. Durch diese Öffnungen ist das Dämpfungselement in vorteilhafter Weise in der Lage die Schwingungen zu mindern und eine wirksame Entkopplung zwischen dem Aggregat und dem Bauraum bereitzustellen. Gemäß einer vorteilhaften Ausführungsform der Erfindung kann es dabei vorgesehen sein, dass es sich bei diesen ersten Öffnungen um Durchgangsöffnungen handelt, welche die gesamte axiale Länge des Elastomerhalters durchgreifen. Es sei an dieser Stelle jedoch ausdrücklich erwähnt, dass sich die Erfindung nicht auf eine solche Ausgestaltung der ersten Öffnungen beschränkt. So ist es auch denkbar, dass die Öffnungen als einseitig randoffene Ausnehmungen oder als Einschlüsse ausgebildet sein können. Gemäß einer vorteilhaften Weiterbildung der Erfindung ist es vorgesehen, dass die ersten Öffnungen mit zunehmendem Abstand vom Befestigungselement einen abnehmenden Querschnitt aufweisen, wobei zum Vergleich der Querschnitte dieser ersten Öffnungen selbstverständlich der jeweilige Querschnitt der Öffnung in derselben Radialebene heranzuziehen ist. Zur Optimierung der Schwingungsdämpfung und Schwingungsisolation kann es ferner vorgesehen sein, dass die Abnahme des Querschnittes mit zunehmendem Abstand von der Befestigungsstelle kontinuierlich erfolgt. Unter der Begrifflichkeit einer Vielzahl an ersten Öffnungen können dabei insbesondere einen Anzahl zwischen 5 und 50 ersten Öffnungen verstanden werden, wobei die Öffnungen vorzugsweise derart dimensioniert sind, dass ihr Durchmesser in etwa der Hälfte der Materialdicke des Elastomerhalters entspricht. Selbstverständlich können jedoch Anzahl und Form der ersten Öffnungen an die jeweiligen Randbedingungen des Systems angepasst werden. So ist es beispielsweise auch denkbar, dass das Dämpfungselement als Schaum beziehungsweise als poröses Material ausgebildet ist und somit aufgrund der Ausbildung des Materials unter einer Vielzahl an Öffnungen ein Bereich weit über 50 ersten Öffnungen verstanden werden kann.

Gemäß einer vorteilhaften Ausführungsform der Erfindung ist es vorgesehen, dass die ersten Öffnungen einen im Wesentlichen runden Querschnitt aufweisen. Solche runden Querschnitte lassen sich insbesondere durch Extrusion einfach herstellen. Es sei an dieser Stelle jedoch ausdrücklich angemerkt, dass auch andere Querschnittsformen der ersten Öffnungen denkbar sind insofern diese dazu geeignet sind eine schwingungsdämpfende und schwingungsisolierende Funktion bereitzustellen. So ist es beispielsweise denkbar, dass die ersten Öffnungen trapezförmig ausgebildet sind, wobei zwischen den ersten Öffnungen geometriebedingt jeweils Stege stehen bleiben. Solche Stege können in vorteilhafter Weise besonders elastisch ausgebildet sein, sodass das Dämpfungselement in vorteilhafter Weise die Schwingungen minimieren kann. Selbstverständlich ist es auch denkbar, dass die ersten Öffnungen einen ovalen Querschnitt aufweisen. Gemäß einer Weiterbildung der Erfindung ist es vorgesehen, dass die ersten Öffnungen jeweils einen ähnlichen beziehungsweise zueinander kongruenten Querschnitt aufweisen.

In einer vorteilhaften Weiterbildung der Erfindung sind die ersten Öffnungen entlang einer gedachten Halbellipse angeordnet. Dabei ist es vorgesehen, dass die jeweiligen ersten Öffnungen mit ihrem Mittelpunkt auf dieser gedachten Halbellipse liegen.

Gemäß einer weiteren vorteilhaften Ausführungsform der Erfindung ist es ferner vorgesehen, dass der Elastomerhalter im Bereich des Befestigungselementes zweite Öffnungen aufweist. Durch die Anordnung der zusätzlichen zweiten Öffnungen im Bereich des Befestigungselementes kann in vorteilhafter Weise die Steifigkeit des Dämpfungselementes im Bereich der Schwingungsübertragung gesenkt werden. Gemäß einer vorteilhaften Ausführungsform weisen diese zweiten Öffnungen mit zunehmendem Abstand vom Befestigungselement ebenfalls einen abnehmenden, runden Querschnitt auf. Es sei an dieser Stelle jedoch ausdrücklich erwähnt, dass hinsichtlich der Anordnung und der Ausgestaltung von ersten Öffnungen und zweiten Öffnungen vielfältige Kombinationsmöglichkeiten denkbar sind. So können auch die zweiten Öffnungen rechteckig oder trapezförmig ausgestaltet sein. Erfindungswesentlich ist lediglich, dass das Dämpfungselement überwiegend im Bereich des Befestigungselementes angeordnet ist.

Gemäß einer vorteilhaften Ausführungsform der Erfindung weist das zweite Halteelement einen im wesentlichen sichelförmigen Querschnitt auf, wobei unter dem Begriff Querschnitt analog zum Öffnungsquerschnitt der ersten beziehungsweise zweiten Öffnungen der sich in der Radialebene erstreckende Querschnitt verstanden werden kann. Eine solche sichelförmige Ausgestaltung des zweiten Halteelementes stellt in vorteilhafter Weise eine belastungsangepasste Materialaufwendung dar.

Eine besonders einfache und kostengünstige Haltevorrichtung kann insbesondere dadurch bereitgestellt werden, dass das erste Halteelement, das zweite Halteelement und das Dämpfungselement einteilig ausgebildet sind. Eine solche einteilige Ausführungsform des Elastomerhalters lässt sich in vorteilhafter Weise dadurch bereitstellen, dass der Elastomerhalter als Hohlkörper mit einem, zur Aufnahme des Aggregates geeigneten, Innenbereich extrudiert hergestellt ist.

Der erfindungsgemäße Elastomerhalter ist in besonders bevorzugter Weise dazu geeignet in einer solchen Haltevorrichtung eingesetzt zu werden, welche dazu ausgebildet ist ein entsprechendes Aggregat in einem Bauraum, insbesondere einem Kraftfahrzeug anzubringen. Bedingt durch seine Ausführungsform mit einem im Wesentlichen ringförmigen ersten Halteelement und einem zweiten Halteelement, wobei das erste Halteelement einen Innenbereich aufweist, welcher zur Aufnahme des Aggregats vorgesehen ist und wobei das zweite Halteelement mittels wenigstens einem Dämpfungselement mit dem ersten Halteelement verbunden ist, und wobei das zweite Halteelement eine Schnittstelle zur Anordnung des Befestigungselementes aufweist und das Dämpfungselement überwiegend im Bereich der Schnittstelle angeordnet ist, kann der erfindungsgemäße Elastomerhalter in besonders vorteilhafter Weise Schwingungen minimieren und kann gleichzeitig einfach und kostengünstig mittels Extrusion gefertigt werden.

### Zeichnung

Ausführungsbeispiele der Erfindung sind in den Figuren dargestellt und in der nachfolgenden Beschreibung näher erläutert. Es zeigen:
Figur 1 eine schematische Darstellung einer erfindungsgemäßen Haltevorrichtung mit einem Elastomerhalter,
Figur 2a eine schematische Schnittdarstellung eines Elastomerhalters gemäß einer ersten Ausführungsform,
Figur 2b eine schematische Schnittdarstellung eines Elastomerhalters gemäß einer zweiten Ausführungsform,
Figur 3 eine perspektivische Darstellung eines mittels Extrusion hergestellten Grundkörpers vor der Vereinzelung zu erfindungsgemäßen Elastomerhaltern.

### Beschreibung

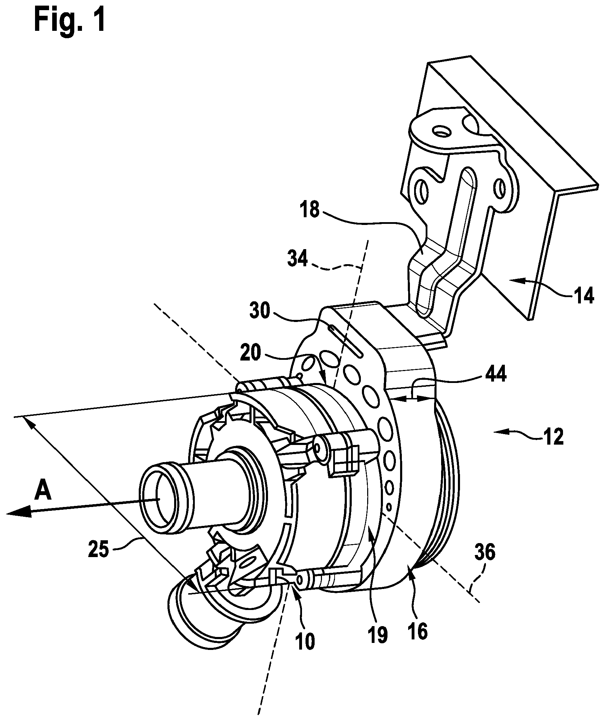

Figur 1 zeigt ein Aggregat 10, welches über eine Haltevorrichtung 12 in einem Bauraum, insbesondere einem Kraftfahrzeug 14 angebracht werden kann. Das Aggregat 10 kann insbesondere eine Pumpe, eine Kühlkreislaufpumpe, ein Elektromotor, ein Lüfter oder weitere Komponenten, die an und/oder in einem Kraftfahrzeug 14 angebracht werden, sein. Beispielhaft ist in Figur 1 das Aggregat 10 als Pumpe, bzw. als Kühlkreislaufpumpe ausgebildet. Das Kraftfahrzeug 14 ist in Figur 1 zur Vereinfachung der Darstellung lediglich als winkelförmiges Karosserieteil dargestellt. Ferner ist in Figur 1 das Aggregat 10 lediglich beispielshaft als Pumpe, bzw. als Kühlkreislaufpumpe ausgebildet.

Erfindungsgemäß weist die Haltevorrichtung 12 einen Elastomerhalter 16 und ein Befestigungselement 18 auf, über welches der Elastomerhalter am Kraftfahrzeug 14 angebracht werden kann. Wie in Figur 1 deutlich zu erkennen ist, ist der Elastomerhalter im Wesentlichen ringförmig ausgebildet und weist einen Innenbereich 20 auf, in welchem das Aggregat 10 eingepresst ist.

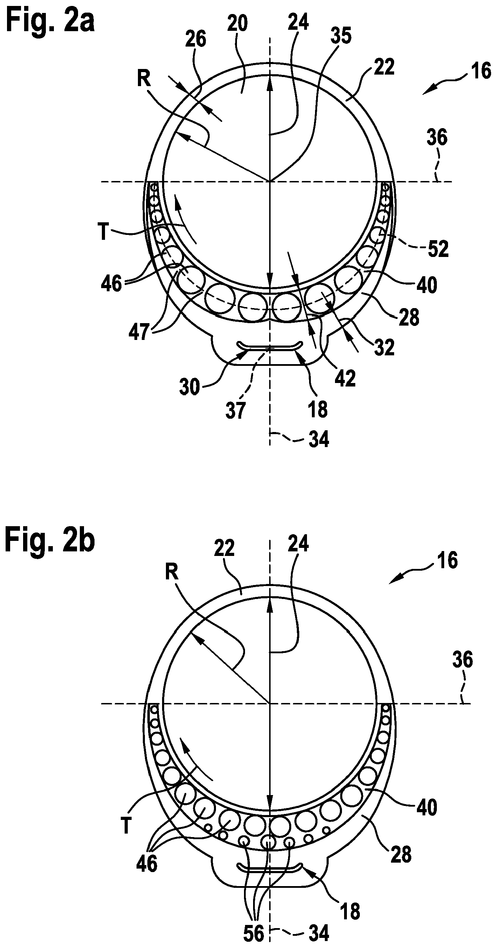

Eine Pumpe der hier zur Rede stehenden Art weist in der Regel ein Flügelrad auf, welches mit einer Drehzahl von in etwa 3750 Umdrehungen/min rotiert. Somit weist die erfindungsgemäße Pumpe eine Resonanzfrequenz auf, welche in etwa bei 500 Hz liegt. Die Übertragung der Resonanzfrequenz und damit die unerwünschte Übertragung des Schalls von der Pumpe bis hin zum Kraftfahrzeuginnenraum erfolgt über vom Aggregat 10 über den Elastomerhalter 16 an das Befestigungselement 18 und schließlich an das Kraftfahrzeug 14. Der erfindungsgemäße Elastomerhalter 16, wie er in den Figuren 1 und 2 dargestellt ist, ist erfindungsgemäß dazu ausgebildet diese Geräuschbildung in vorteilhafter Weise zu minimieren. Neben der Geräuschminimierung ist es ferner Aufgabe der Haltevorrichtung 12 als Dämpfungs- und Entkopplungselement dynamische Belastungen, wie beispielsweise Schüttel- und Vibrationsbelastungen, welche im Betrieb des Kraftfahrzeugs auftreten können, abzufangen. Darüber hinaus ermöglicht eine solche Haltevorrichtung 12 in vorteilhafter Weise eine verliersichere Einspannung des Aggregats 10 bei gleichzeitig geringem notwendigen Materialeinsatz für den Elastomerhalter 16.

In Figur 2a ist eine Ausführungsform des erfindungsgemäßen Elastomerhalters 16 aus Figur 1 in einer vergrößerten Darstellung gezeigt. Figur 2a zeigt einen Elastomerhalter 16 in einer Draufsicht.

Wie in Figur 2a deutlich zu erkennen ist, weist der Elastomerhalter 16 ein erstes Halteelement 22 auf. Das erste Halteelement 22 ist im Wesentlichen ringförmig ausgebildet und umschließt das Aggregat 10. Wie bereits erwähnt, ist gemäß einer Ausführungsform der Erfindung das Aggregat 10 als Pumpe ausgebildet. Eine solche Pumpe, wie sie beispielsweise in Figur 1 dargestellt ist, weist in der Regel in ihrem Aufnahmebereich 19 einen runden Querschnitt auf. Zur verliersicheren Befestigung des Aggregates 10 im ersten Halteelement 22 des Elastomerhalters 16 weist das erste Halteelement 22 erfindungsgemäß einen Innenbereich 20 auf, dessen Form an die Kontur des Aufnahmebereiches 19 des Aggregates 10 angepasst ist. Bei der in den Figuren 1 bis 3 dargestellten Ausführungsform des Elastomerhalters 16 ist das erste Halteelement 22 entsprechend der Kontur des Aufnahmebereiches 19 der Pumpe im Wesentlichen ringförmig ausgebildet.

Gemäß einer vorteilhaften Ausführungsform der Erfindung, wie sie beispielhaft in Figur 1 dargestellt ist, wird eine optimale, verliersichere Befestigung des Aggregates 10 im Elastomerhalter 16 dadurch bereitgestellt, dass der Durchmesser 24 des Innenbereiches 20 kleiner dimensioniert ist als der Durchmesser 25 des Aggregates 10 im Aufnahmebereich 19. Bei der Montage des Elastomerhalters 16 wird dieser somit unter Vorspannung auf das Aggregat 10 aufgeschoben. Auf diese Weise kann eine für die verliersichere Einspannung benötigte Radialpressung zwischen dem Elastomerhalter 16 und dem Aggregat 10 bereitgestellt werden.

Bei der in Figur 2a gezeigten Ausführungsform der Erfindung weist das erste Halteelement 22 mit zunehmendem Abstand von der Befestigungsstelle 18 eine größer werdende Materialdicke 26 auf. Da sich das Belastungsmoment mit welchem das erste Halteelement 22 beaufschlagt wird, mit zunehmendem Abstand vom Befestigungselement 18 entsprechend erhöht, kann über ein solches erstes Halteelement 22, welches mit zunehmendem Abstand von der Befestigungsstelle 18 eine zunehmende Materialdicke 26 aufweist, über den gesamten Umfang des Aggregates 10 eine gleichmäßige Radialpressung bereitgestellt werden.

Neben dem ersten Halteelement 22 weist der erfindungsgemäße Elastomerhalter 16 ferner ein zweites Halteelement 28 auf. Das zweite Halteelement 28 dient insbesondere der Anbindung des Aggregats 10 an das Befestigungselement 18 und sorgt durch seine Formgebung und Anordnung für eine ausreichende Stabilität der Halteeinrichtung 12 und damit einhergehend eine geringere Auslenkung des Aggregats 10 im Bauraum. Erfindungsgemäß ist das Befestigungselement 18 der Haltevorrichtung 10 am zweiten Halteabschnitt 28 angeordnet. Zu diesem Zweck weist der zweite Halteabschnitt 28 einen Aufnahmeschlitz 30 auf. Im montierten Zustand wird das entsprechende Befestigungselement 18, welches beispielsweise als gebogenes Befestigungsblech ausgebildet sein kann, durch den entsprechenden Aufnahmeschlitz 30 geschoben und arretiert.
Neben der in Figur 2a dargestellten Ausführungsform des Aufnahmeschlitzes 30, sind auch andere Ausführungsformen der Befestigung des Befestigungselementes 18 am Elastomerhalter 16 denkbar. So können beispielsweise zwei oder mehr Aufnahmeschlitze 30 vorgesehen sein, welche unter einem definierten Winkel zueinander angeordnet ist. Weiterhin ist es auch denkbar, dass zusätzliche Befestigungsmittel zur Anbindung des Elastomerhalters 16 an das Befestigungselement 18 vorgesehen sind.

Wie in Figur 2a deutlich zu erkennen ist, weist das zweite Halteelement 28 mit zunehmendem Abstand vom Befestigungselement 18 beziehungsweise vom Aufnahmeschlitz 30, eine abnehmende Materialdicke 32 auf. Auch das zweite Halteelement 28 ist somit unter der Randbedingung der Materialeinsparung belastungsoptimiert ausgebildet. Figur 2a zeigt eine Ausführungsform der Erfindung gemäß welcher das zweite Halteelement 28 einen im Wesentlichen sichelförmigen Querschnitt aufweist.

Zur verbesserten Darstellung der Anordnung des ersten Halteelementes 22 und des zweiten Halteelementes 28 zueinander, sind in Figur 2a zwei gedachte Geraden 34 und 36 eingezeichnet, welche sich in der Schnittebene der Darstellung aus Figur 2a erstecken. Die erste gedachte Gerade 34 geht, wie in Figur 2a deutlich zu erkennen ist, durch den Mittelpunkt 35 des im Wesentlichen kreisringförmig ausgebildeten Innenbereiches 20 sowie mittig durch den Aufnahmeschlitzes 30. Die zweite gedachte Gerade 36 steht orthogonal auf der ersten gedachten Geraden 34 und geht ebenfalls durch den Mittelpunkt 35 des Innenbereiches 20.

Wie in Figur 2 deutlich zu erkennen ist, ist das zweite Halteelement 28 symmetrisch zur ersten gedachten Geraden 34 angeordnet, sodass eine gleichmäßige Krafteinleitung am Aufnahmeschlitz 30 erfolgen kann. Erfindungsgemäß ist zwischen dem ersten Halteelement 22 und dem zweiten Halteelement 28 ein Dämpfungselement 40 angeordnet. Wie in Figur 2a deutlich zu erkennen ist, ist das Dämpfungselement 40 dabei überwiegend im Bereich des Befestigungselementes 18 angeordnet.

Gemäß der in Figur 2a dargestellten Ausführungsform der Erfindung weist das Dämpfungselement 40 zum Zweck der überwiegenden Anordnung im Bereich des Befestigungselementes 18 beziehungsweise des Aufnahmeschlitzes 30 ebenfalls eine im Wesentlichen sichelförmige Form auf, das heißt die Materialdicke 42 des Dämpfungselementes 40 nimmt mit zunehmendem Abstand vom Befestigungselement 18 kontinuierlich ab und läuft an seinen jeweiligen Enden im Wesentlichen spitz zu. Bei der in Figur 2a dargestellten Ausführungsform der Erfindung ist das Dämpfungselement 40 lediglich in der dem Befestigungselement 18 zugewandten Hälfte des Elastomerhalters 16, welche durch die zweite Gerade 36 begrenzt wird, angeordnet. Es sind jedoch auch Ausführungsformen denkbar, bei welchem der Dämpfungsabschnitt 40 mit einem Ende oder alternativ mit seinen beiden Enden über die zweite Gerade 36 hinausragt. Erfindungswesentlich ist hierbei lediglich, dass der überwiegende Anteil im Bereich des Befestigungselementes 18 angeordnet ist.

Erfindungsgemäß zeichnet sich das Dämpfungselement 40 dadurch aus, dass es eine geringere Steifigkeit aufweist als das erste Halteelement 22 und das zweite Halteelement 28. Aufgrund der verringerten Steifigkeit des Dämpfungselementes 40 ist dieses in der Lage Vibrations- und Schüttelbelastungen zu dämpfen und eine Entkopplung der Schallübertragungen bereitzustellen. Da sich die Schwingungen des Aggregates 10 nicht nennenswert von den, vom Befestigungselement 18 entfernten Bereichen, über den Elastomerhalter 16 bis hin zum Befestigungselement 18 ausbreiten, ist das erfindungsgemäße Dämpfungselement 40 überwiegend im Bereich des Befestigungselements 18 angeordnet. Auf diese Weise kann in vorteilhafter Weise teures Dämpfungsmaterial eingespart werden.
Zur Bereitstellung der dämpfenden und entkoppelnden Funktion weist das Dämpfungselement 40 gemäß der in Figur 2a dargestellten Ausführungsform der Erfindung erste Öffnungen 46 auf. Es sei an dieser Stelle ausdrücklich erwähnt, dass die geringere Steifigkeit des Dämpfungselementes 40 gegenüber der Halteelemente 22, 28 zusätzlich oder alternativ auch über die Varianz der Materialeigenschaften bereitgestellt werden kann. Dies kann beispielsweise dadurch erzielt werden, dass dem Dämpfungselement 40 Weichmacher oder anderen Additiven beigefügt werden.

Die ersten Öffnungen 46 erzielen erfindungsgemäß eine Verringerung der Steifigkeit in allen Raumrichtungen. Zur Verdeutlichung dieser Raumrichtungen sind sowohl die Radialrichtung R als auch die Tangentialrichtung T in Figur 2a eingezeichnet. Auch die Axialrichtung A ist aus Figur 1 zu entnehmen. Durch die Anordnung der jeweils größten Öffnungen 46 im Bereich der Kundenschnittstelle beziehungsweise des Befestigungselementes 18 ist die Entkopplung an der Stelle des kürzesten Übertragungspfades vom Aggregat 10 beziehungsweise der Pumpe ins Kraftfahrzeug 14 in vorteilhafter Weise am größten.

Gemäß einer möglichen Ausführungsform der Erfindung weisen die ersten Öffnungen 46 mit zunehmendem Abstand vom Befestigungselement 18 einen abnehmenden Querschnitt auf. Wie in Figur 2a deutlich zu erkennen ist sind die ersten Öffnungen 46 beziehungsweise das Dämpfungselement 40 gemäß der hier dargestellten Ausführungsform lediglich in der dem Befestigungselement 18 zugeordneten Hälfte des Elastomerhalters 16 angeordnet, wobei diese Hälfte durch die zweite gedachte Gerade 38 begrenzt wird. Es sei an dieser Stelle jedoch ausdrücklich erwähnt, dass die ersten Öffnungen 46 beziehungsweise das Dämpfungselement 40 über die zweite Gerade 36 hinausgehen können. Mit anderen Worten es ist auch denkbar, dass sich das Dämpfungselement 40 und zusätzlich oder alternativ hierzu auch die ersten Öffnungen 46 über mehr als den halben Umfang des Elastomerhalters 16 erstreckt. Erfindungswesentlich ist hierbei lediglich, dass der überwiegende Teil der ersten Öffnungen 46 im Bereich des Befestigungselementes 18 angeordnet sind, wobei unter dem überwiegenden Teil der ersten Öffnungen nicht die rein numerische Anzahl der ersten Öffnungen 46 zu verstehen ist, sondern die überdeckende Fläche der ersten Öffnungen 46.

Wie in Figur 2a dargestellt ist, sind gemäß einer möglichen Ausführungsform der Erfindungen die ersten Öffnungen 46 kreisrund ausgebildet. Solche runden Öffnungen 46 lassen sich in vorteilhafter Weise insbesondere mittels Extrusion einfach herstellen. Es sei an dieser Stelle jedoch angemerkt, dass auch andere Öffnungsformen 46 denkbar sind. So ist es beispielsweise denkbar, dass die ersten Öffnungen 46 einen rechteckigen beziehungsweise trapezförmigen Querschnitt aufweisen, wodurch sich die jeweils zwischen den ersten Öffnungen 46 angeordneten Stege 47 in vorteilhafter Weise besonders elastisch ausbilden lassen und damit einhergehend die Steifigkeit des Dämpfungselementes 40 zusätzlich verringert werden kann. Wie in Figur 2a ferner dargestellt ist, sind die ersten Öffnungen 46 gemäß der hier dargestellten Ausführungsform bezogen auf ihre Mitten entlang einer gedachten Halbellipse 52 angeordnet. Gemäß der in Figur 2a dargestellten Ausführungsform der Erfindung nimmt der Querschnitt dieser ersten Öffnungen 46 mit zunehmendem Abstand vom Befestigungselement 18 entlang der gedachten Halbellipse 52 kontinuierlich ab.

Wie Figur 2a ferner zu entnehmen ist, umgreift das erste Halteelement 22 gemäß der hier dargestellten Ausführungsform zumindest abschnittsweise das Dämpfungselement 40 und das zweite Halteelement 28 in Tangentialrichtung T. Gemäß einer vorteilhaften Ausführungsform der Erfindung sind dabei das erste Halteelement 22 und das zweite Halteelement 28 beziehungsweise das Dämpfungselement 40 derart gegenläufig sichelförmig zulaufend ausgebildet, dass sie gemeinsam ein Elastomerhalter 16 ausbilden, welcher im Übergangsbereich zwischen dem ersten Halteelement 22 und dem zweiten Halteelement 28 eine im Wesentlichen sprung- beziehungsweise knickfreie Kontur aufweist.

Figur 2b zeigt eine weitere Ausführungsform des erfindungsmäßen Elastomerhalters.16 in einer radialen Schnittebene entsprechend Figur 2a mit dem Unterschied, dass das Dämpfungselement 40 neben den ersten Öffnungen 46 zusätzlich zweite Öffnungen 56 aufweist. Wie in Figur 2b deutlich zu erkennen ist, sind die zweiten Öffnungen im Bereich des Befestigungselementes 18 angeordnet und führen somit zu einer vorteilhaften Verringerung der Steifigkeit des Dämpfungselementes 40 im Bereich der Übertragung der Schwingungen.

Auch die zweiten Öffnungen 56 weisen, bei der in Figur 2b dargestellten Ausführungsform mit zunehmendem Abstand vom Befestigungselement 18 einen abnehmenden Querschnitt auf. Es sei an dieser Stelle jedoch ausdrücklich erwähnt, dass sich hinsichtlich der Anordnung und der Ausgestaltung von ersten Öffnungen 46 und zweiten Öffnungen 56 vielfältige Kombinationsmöglichkeiten denkbar sind. So können auch die zweiten Öffnungen 56 rechteckig oder trapezförmig ausgestaltet sein. Ferner ist es auch denkbar, dass die ersten Öffnungen 46 und zusätzlich oder alternativ hierzu auch die zweiten Öffnungen 56 den gleichen Querschnitt aufweisen und die verringerte Steifigkeit im Bereich der Befestigung aufgrund der Anordnung der zweiten Öffnungen 56 im Bereich des Befestigungselementes 18 bereitgestellt wird. Weiterhin ist es auch denkbar, dass die ersten Öffnungen 46 und zusätzlich oder alternativ hierzu auch die zweiten Öffnungen 56 mit zunehmendem Abstand von der Befestigung 18 einen abnehmenden Querschnitt aufweisen. Erfindungswesentlich ist lediglich, dass das Dämpfungselement 40 und damit einhergehend die ersten Öffnungen 46 beziehungsweise die zweiten Öffnungen 56 überwiegend im Bereich des Befestigungselementes angeordnet sind und die dämpfende beziehungsweise entkoppelnde Wirkung mit zunehmendem Abstand vom Befestigungselement 18 abnimmt.

Die ersten Öffnungen 46 und zweiten Öffnungen 56 sind gemäß den Figuren 2a und 2b als Durchgangsöffnungen ausgebildet, welche sich über die gesamte axiale Länge 44 des Elastomerhalters 16 erstrecken. Solche Durchgangsöffnungen 46, 56 lassen sich in bevorzugter Weise mittels Extrusion herstellen. Es ist jedoch auch denkbar, dass ersten Öffnungen 46 und zusätzlich oder alternativ hierzu auch die zweiten Öffnungen 56 als randoffene Ausnehmungen oder als Einschlüsse ausgebildet sein können.

Gemäß einer vorteilhaften Ausführungsform der Erfindung ist der Elastomerhalter 16 einstückig beziehungsweise einteilig ausgebildet. Durch die einstückige Ausbildung ist in vorteilhafter Weise eine einfache Herstellung mittels Extrusion möglich. Für einen solchen mittels Extrusion hergestellten Elastomerhalter 16 eignen sich als Materialien insbesondere hochdämpfende Elastomerpuffer, welche die Schwingungsenergie absorbieren und diese in innere Reibung umwandeln. Insbesondere EPDM (Ethylen-Propylen-Dien-Kautschuk) kann in vorteilhafter Weise mittels Extrusion verarbeitet werden, wobei durch Hinzufügen von Füllmitteln beziehungsweise Weichmachern die Eigenschaften entsprechend der vorgegebenen Randbedingungen eingestellt werden können.

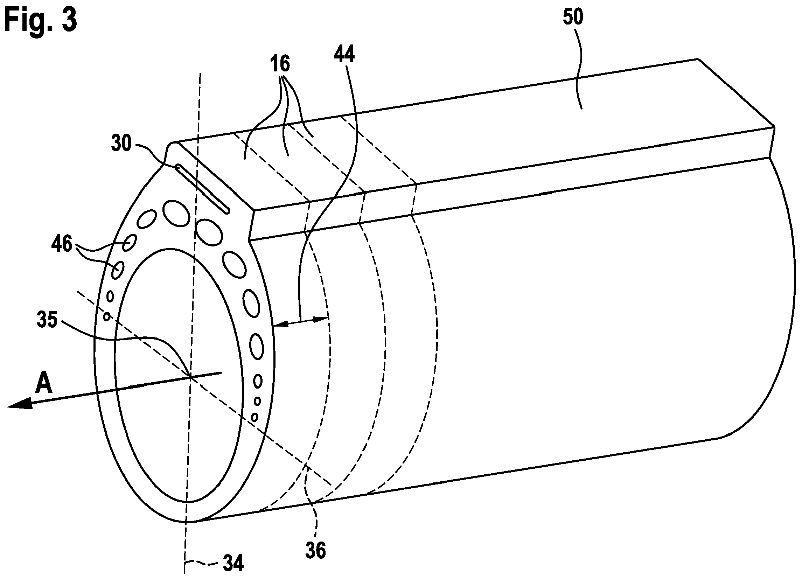

In Figur 3 ist ein mittels Extrusion hergestellter Grundkörper 50 dargestellt, welcher in einem sich an die Extrusion anschließenden Vereinzelungsschritt zu einer Vielzahl an erfindungsmäßen Elastomerhaltern 16 der axialen Länge 44 segmentiert wird. Bei der Herstellung des erfindungsgemäßen Elastomerhalters 16, wird ein sich in Axialrichtung A erstreckender Grundkörper 50, welcher die gewünschte Kontur des Elastomerhalters aufweist, extrudiert und auf die entsprechende axiale Länge 44 des Elastomerhalters 16 gekürzt. Selbstverständlich lassen sich auch andere Elastomerhalterformen extrudiert herstellen Erfindungswesentlich ist hierbei lediglich, dass der Grundkörper 50 als ein sich in Axialrichtung A erstreckender, langgestreckter Hohlkörper mit einem zur Aufnahme des Aggregates 10 geeigneten Innenbereich 20 extrudiert wird und in einem sich anschließenden Vereinzelungsschritt auf die gewünschte axiale Länge 44 des Elastomerhalters 16 gekürzt wird.

## Patentansprüche

1. Haltevorrichtung (12) zur Befestigung eines Aggregats (10), insbesondere einer Pumpe, an einem Kraftfahrzeug (14), mit einem Elastomerhalter (16) und einem Befestigungselement (18) zum Anbringen des Elastomerhalters (16) in einem Bauraum, insbesondere einem Kraftfahrzeug (14), wobei der Elastomerhalter (16) ein im Wesentlichen ringförmiges erstes Halteelement (22) und ein zweites Halteelement (28) aufweist, wobei das erste Halteelement (22) einen Innenbereich (20) aufweist, der zur Aufnahme des Aggregats (10) vorgesehen ist und wobei das zweite Halteelement (28) mittels wenigstens eines Dämpfungselementes (40) mit dem ersten Halteelement (22) verbunden ist, und wobei am zweiten Halteelement (28) das Befestigungselement (18) angeordnet ist, **dadurch gekennzeichnet, dass** das Dämpfungselement (40) überwiegend im Bereich des Befestigungselementes (18) angeordnet ist.

2. Haltevorrichtung (12) nach Anspruch 1 **dadurch gekennzeichnet, dass** das Dämpfungselement (40) mit zunehmendem Abstand von dem Befestigungselement (18) einen abnehmenden Querschnitt aufweist.

3. Haltevorrichtung (12) nacheinem der vorhergehenden Ansprüche, **dadurch gekennzeichnet, dass** das Dämpfungselement (40) einen sichelförmigen Querschnitt aufweist und zwischen dem ersten Halteelement (22) und dem zweiten Halteelement (28) angeordnet ist.

4. Haltevorrichtung (12) nach einem der vorhergehenden Ansprüche, **dadurch gekennzeichnet, dass** das erste Halteelement (22) zumindest abschnittsweise das Dämpfungselement (40) und/oder das das zweite Halteelement (28) umgreift.

5. Haltevorrichtung (12) nach einem der vorhergehenden Ansprüche, **dadurch gekennzeichnet, dass** das Dämpfungselement (40) eine Vielzahl an ersten Öffnungen (46) aufweist, welche mit zunehmendem Abstand vom Befestigungselement (18) einen abnehmenden Querschnitt aufweisen.

6. Haltevorrichtungen (12) nach einem der vorhergehenden Ansprüche, **dadurch gekennzeichnet, dass** die ersten Öffnungen (46) einen im Wesentlichen runden Querschnitt aufweisen.

7. Haltevorrichtung (12) nach einem der vorhergehenden Ansprüche, **dadurch gekennzeichnet, dass** die ersten Öffnungen (46) entlang einer gedachten Halbellipse (52) angeordnet sind.

8. Haltevorrichtung (12) nach einem der vorhergehenden Ansprüche, **dadurch gekennzeichnet, dass** im Bereich des Befestigungselementes (18) zweite Öffnungen (56) vorgesehen sind.

9. Haltevorrichtung (12) nach einem der vorhergehenden Ansprüche, **dadurch gekennzeichnet, dass** die zweiten Öffnungen (56) mit zunehmendem Abstand vom Befestigungselement (18) einen abnehmenden Querschnitt aufweisen.

10. Haltevorrichtung (12) nach einem der vorhergehenden Ansprüche, **dadurch gekennzeichnet, dass** das zweite Haltelement (46) einen im Wesentlichen sichelförmigen Querschnitt aufweist.

11. Haltevorrichtung (12) nach einem der vorhergehenden Ansprüche, **dadurch gekennzeichnet, dass** das erste Halteelement (22), das zweite Halteelement (28) und das Dämpfungselement (40) einteilig insbesondere einstückig ausgebildet sind.

12. Haltevorrichtung (12) nach einem der vorhergehenden Ansprüche, **dadurch gekennzeichnet, dass** der Elastomerhalter (16) als Hohlkörper mit einem zur Aufnahme des Aggregates (10) geeignetem Innenbereich (20) extrudiert hergestellt ist.

13. Elastomerhalter (16) nach einem der vorhergehenden Ansprüche, mit einem im Wesentlichen ringförmigen ersten Halteelement (22) und einem zweiten Halteelement (28), wobei das erste Halteelement (22) einen Innenbereich (20) aufweist, der zur Aufnahme des Aggregats (10) vorgesehen ist und wobei das zweite Halteelement (28) mittels wenigstens einem Dämpfungselement (40) mit dem ersten Halteelement (22) verbunden ist, und wobei das zweite Halteelement (28) eine Schnittstelle zur Anordnung des Befestigungselementes (18) aufweist und das Dämpfungselement (40) überwiegend im Bereich der Schnittstelle angeordnet ist.
